# EUROPEAN PATENT APPLICATION

(11) **EP 4 391 633 A1**
(43) Date of publication of application: **26.06.2024**
(21) Application number: 21954143.0
(22) Date of filing: 16.08.2021
(51) Int. Cl.: H04W 24/10, H04W 72/04

(54) **TERMINAL AND COMMUNICATION METHOD**

(71) Applicant: NTT DOCOMO, INC., Tokyo 100-6150 (JP)
(72) Inventor: HIGUCHI, Syouichi, Tokyo 100-6150 (JP); OHARA, Tomoya, Tokyo 100-6150 (JP); OKAMURA, Masaya, Tokyo 100-6150 (JP); YOKOKAWA, Tomoki, Tokyo 100-6150 (JP); NAKAMURA, Takuma, Tokyo 100-6150 (JP); SHIMA, Kousuke, Tokyo 100-6150 (JP)
(74) Representative: Hoffmann Eitle
(86) International application number: PCT/JP2021/029957
(87) International publication number: WO 2023/021568

(57) **Abstract**

A terminal includes: a reception unit configured to receive a signal from a base station via each of multiple carriers in a same band; a control unit configured to determine whether a reception power imbalance between two carriers among the multiple carriers exceeds a threshold value; and a transmission unit configured to transmit information indicating whether the reception power imbalance exceeds the threshold value to the base station.

## Description

### [FIELD OF THE INVENTION]

The present invention relates to a terminal and a communication method in a wireless communication system.

### [BACKGROUND OF THE INVENTION]

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirement of a radio link delay of 1 ms or less while achieving throughput of 10 Gbps or more (e.g., non-patent literature 1).

In addition, discussions on 6G as the next generation wireless communication method to 5G have been started, and the radio quality exceeding 5G is expected to be achieved. For example, in 6G, discussions are being held aiming at, for example, further increasing the capacity, using a new frequency band, further reducing the latency, further increasing the reliability, and increasing the coverage in the new areas (high altitude, ocean, and universe).

### [Citation List]

### [Non-Patent Document]

[Non-Patent Document 1] 3GPP TS 38.300 V16.6.0 (2021-06)

### SUMMARY OF THE INVENTION

### [TECHNICAL PROBLEM]

For example, in the future network such as 6G, in order to further improve communication speed, communication capacity, reliability, latency performance, and the like, the frequency higher than the conventional frequencies and the bandwidth wider than the conventional bandwidth are expected to be used. In order to improve communication speed, carrier aggregation is expected to be performed even in the future network. The number of bundling carries is expected to be increased as compared with the conventional carrier aggregation because a wider band can be used.

Here, as an element of negatively affecting the communication speed, there is a reception power imbalance at the time of carrier aggregation. For example, in the conventional carrier aggregation, the supported range of the reception power imbalance between carriers is up to 6 dB, and, in a case where the reception power imbalance between carriers exceeds this range, the reception quality of some carriers is deteriorated.

As described above, in the future network, the number of bundling carriers at the time of carrier aggregation is expected to be increased, and thus, it is more likely that the power imbalance will be an issue.

The present invention has been made in view of the above points, and it is an object of the present invention to suppress the decrease of quality caused by the reception power imbalance between carriers.

### [SOLUTION TO PROBLEM]

According to the disclosed technology, a terminal is provided. The terminal includes: a reception unit configured to receive a signal from a base station via each of multiple carriers in a same band; a control unit configured to determine whether a reception power imbalance between two carriers among the multiple carriers exceeds a threshold value; and a transmission unit configured to transmit information indicating whether the reception power imbalance exceeds the threshold value to the base station.

### [ADVANTAGEOUS EFFECTS OF INVENTION]

According to the disclosed technique, the quality decrease caused by the reception power imbalance between carriers can be suppressed in a wireless communication system.

### BRIEF DESCRIPTION OF THE DRAWINGS

[Fig. 1] Fig. 1 is a drawing illustrating a wireless communication system in an embodiment of the present invention.
[Fig. 2] Fig. 2 is a drawing illustrating an example (1) of carrier aggregation.
[Fig. 3] Fig. 3 is a drawing illustrating an example (2) of carrier aggregation.
[Fig. 4] Fig. 4 is a sequence diagram illustrating an example of an indication in an embodiment of the present invention.
[Fig. 5] Fig. 5 is a drawing illustrating an example (1) of determining power imbalance in an embodiment of the present invention.
[Fig. 6] Fig. 6 is a drawing illustrating an example (2) of determining power imbalance in an embodiment of the present invention.
[Fig. 7] Fig. 7 is a drawing illustrating an example (3) of determining power imbalance in an embodiment of the present invention.
[Fig. 8] Fig. 8 is a drawing illustrating an example of a functional structure of a base station 10 in an embodiment of the present invention.
[Fig. 9] Fig. 9 is a drawing illustrating an example of a functional structure of a terminal 20 in an embodiment of the present invention.
[Fig. 10] Fig. 10 is a drawing illustrating an example of a hardware structure of the base station 10 or the terminal 20 according to an embodiment of the present invention.
[Fig. 11] Fig. 11 is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

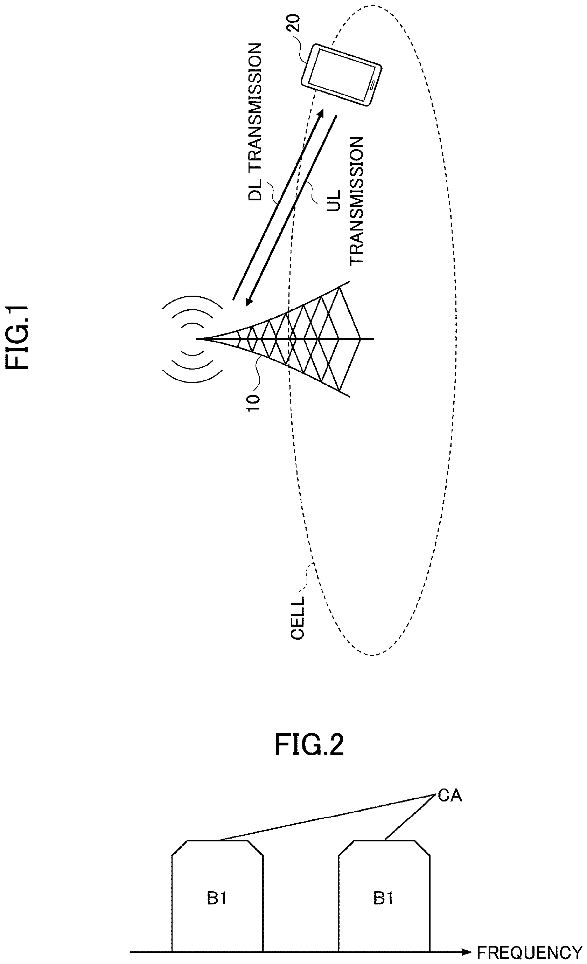

Fig. 1 is a drawing illustrating a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. In addition, a TTI (Transmission Time Interval) in the time domain may be a slot or a sub-slot, or the TTI may be a subframe.

The base station 10 can perform carrier aggregation (CA: Carrier Aggregation) to communicate with the terminal 20 by bundling multiple cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

Here, for example, in the future network such as 6G, in order to further improve communication speed, communication capacity, reliability, latency performance, and the like, the frequency higher than the conventional frequencies and the bandwidth wider than the conventional bandwidth are expected to be used. In order to improve communication speed, carrier aggregation is expected to be performed even in the future network. The number of bundling carries is expected to be increased as compared with the conventional carrier aggregation because a wider band can be used.

As an element of negatively affecting the communication speed, there is a reception power imbalance at the time of carrier aggregation. For example, in the conventional carrier aggregation, the supported range of the reception power imbalance between carriers is up to 6 dB, and, in a case where the reception power imbalance between carriers exceeds this range, the reception quality of some carriers is deteriorated. Note that the occurrence of power imbalance may mean an occurrence of a state in which the reception power imbalance between carriers exceeds a predetermined value.

As described above, in the future network, the number of bundling carriers at the time of carrier aggregation is expected to be increased, and thus, it is more likely that the power imbalance will be an issue.

The power imbalance is an issue that occurs between carriers that are received by the same antenna in the terminal 20. Therefore, the power imbalance is an issue that occurs in the contiguous carrier aggregation and in the non-contiguous carrier aggregation in the same band (that is, intra-band). On the other hand, the power imbalance basically does not occur in the carrier aggregation in different bands (that is, inter-band) because reception antennas are different.

Fig. 2 is a drawing illustrating an example (1) of carrier aggregation. Fig. 2 illustrates the carrier aggregation in the 2 GHz band B1 as an example of an intra-band carrier aggregation. When the power imbalance between a B1 carrier and a B1 carrier exceeds 6 dB, the reception quality of one of the carriers is deteriorated.

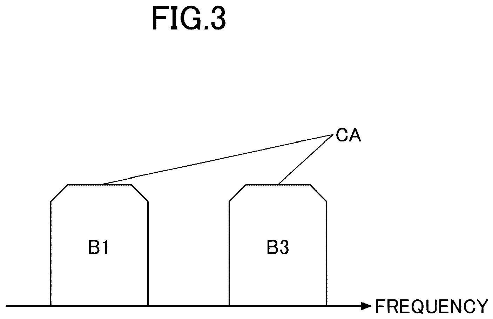

Fig. 3 is a drawing illustrating an example (2) of carrier aggregation. Fig. 3 illustrates the carrier aggregation between 2 GHz band B1 and 1.8 GHz band B3 as an example of an inter-band carrier aggregation. The power imbalance does not occur between the B1 carrier and the B3 carrier. Note that, in a case where the carrier aggregation is performed in the B1, the power imbalance may occur in the B1.

The power imbalance is an issue that occurs even between LTE and NR, and is not affected by the communication method difference. Therefore, the power imbalance is an issue that may occur even in EN-DC (EUTRA-NR Dual Connectivity), for example.

As described above, there is a possibility of occurrence of an issue of power imbalance in a case where the terminal 20 performs contiguous carrier aggregation and non-contiguous carrier aggregation in the same band. For example, in the future network such as 6G, there is concern that the number of bundling carriers at the time of carrier aggregation is expected to be increased, and that the probability of occurrence of power imbalance will become higher.

However, in the conventional network, whether power of each carrier received by the terminal 20 causes the power imbalance to occur cannot be determined, and thus, it is difficult to sufficiently achieve improvement of communication speed by using the carrier aggregation. For example, in a case where the power imbalance occurs when the user is standing still, there is little change in the propagation environment, and thus, the effect of the power balance is expected to be significant.

Therefore, the following proposal 1) to proposal 3) will be proposed.

Proposal 1) The terminal 20 may measure the reception power imbalance between carriers, and may indicate whether the power imbalance will occur to the network.

Proposal 2) The terminal 20 may measure the reception power imbalance between carriers, and may indicate to the network not to allocate one or more specific carriers, or may indicate to the network to allocate one or more specific carriers.

Proposal 3) The network may indicate carrier allocation switching or scheduling to the terminal 20, based on the information of proposal 1 and/or proposal 2 that is indicated by the terminal 20. In addition, the network may indicate, to the terminal 20, that the transmission power of a specific carrier is changed, based on the information of proposal 1 and/or proposal 2.

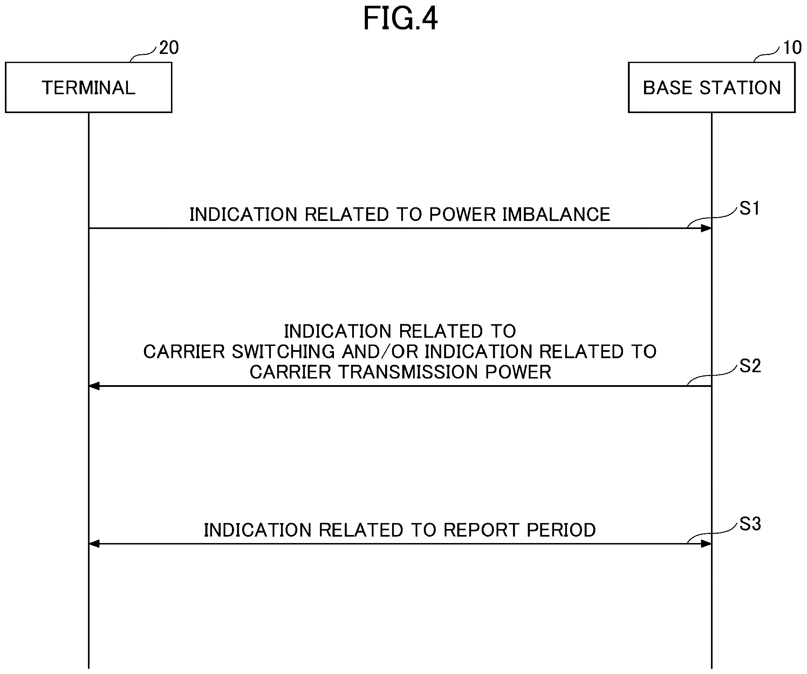

Fig. 4 is a sequence diagram illustrating an example of an indication in an embodiment of the present invention. In step S1, the terminal 20 transmits an indication related to the power imbalance to the base station 10. The indication related to the power imbalance may be an indication for indicating the information of proposal 1 and/or proposal 2. In subsequent step S2, the base station 10 may transmit an indication related to the carrier switching to the terminal 20, based on the received indication related to the power imbalance, or may transmit an indication related to the transmission power of a carrier to the terminal 20. In step S3, the base station 10 and the terminal 20 may transmit and receive an indication related to a report period of the indication related to the power imbalance. For example, the terminal 20 may indicate a change of the report period to the base station 10, or the base station 10 may indicate a change of the report period to the terminal 20.

Hereinafter, the proposal 1 will be described in detail. The terminal 20 may measure the reception power imbalance between carriers, and may indicate whether the power imbalance will occur to the network. Regarding the threshold value for determining whether the power imbalance has occurred, a common reception power imbalance (for example, 6 dB) may be used for all frequency bands, different threshold values may be used in accordance with the frequency band, or the threshold value may be changed in accordance with the mobility of the terminal 20.

For example, the threshold value may be 6 dB for FR1 (Frequency Range 1) and FR2. For example, the threshold value may be 6 dB for FR1 and 10 dB for FR2. For example, the threshold value in a case of high-speed movement may be larger than the threshold value in a case of low-speed movement. For example, the threshold value in a case of high-speed movement may be smaller than the threshold value in a case of low-speed movement.

The terminal 20 may indicate, to the base station 10, information indicating the reference carrier for determining whether the power imbalance has occurred and information indicating presence or absence of occurrence of the power imbalance in carriers other than the reference carrier. In addition, by using all carriers as references for determining whether the power imbalance has occurred, the terminal 20 may indicate, to the base station 10, information indicating presence or absence of occurrence of power imbalance in carriers other than the reference carrier in a case of using each carrier as a reference. Note that, the reference carrier may be a carrier to be used, or may be a carrier to be measured.

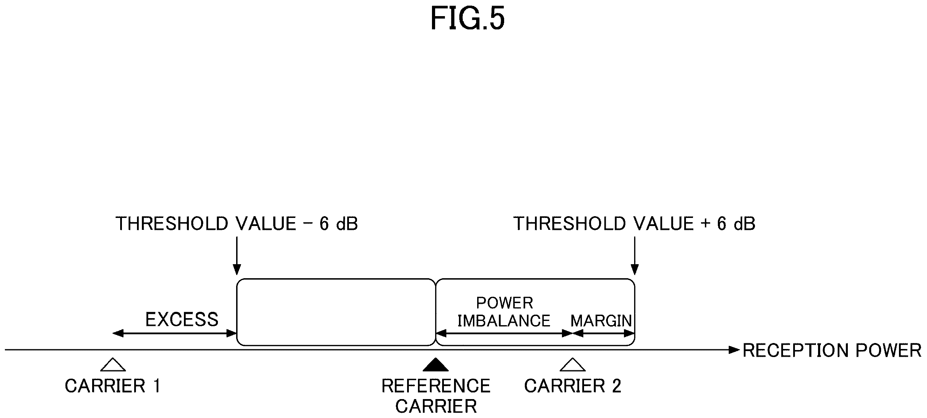

Fig. 5 is a drawing illustrating an example (1) of determining power imbalance in an embodiment of the present invention. As illustrated in Fig. 5, the power imbalance may be determined to have occurred in a case where the reception power is greater than a value obtained by adding the threshold value to the reception power of the reference carrier, or in a case where the reception power is less than a value obtained by subtracting the threshold value from the reception power of the reference carrier. In Fig. 5, the threshold value is 6 dB, and the reception power of carrier 1 is less than the value obtained by subtracting the threshold value from the reception power of the reference carrier, and thus, it is determined that the power imbalance has occurred. On the other hand, the power imbalance of the reception power of carrier 2 is within the threshold value, and thus, it is determined that the power imbalance has not occurred.

The terminal 20 may select a carrier whose reception power is the lowest as a reference carrier, or may select a carrier whose reception power is the highest as a reference carrier. In other words, the terminal 20 may determine the reference carrier, based on the reception power of the carrier. In addition, the terminal 20 may select, as a reference carrier, a carrier for which the index in the CQI (Channel Quality Indicator) table to be indicated to the network is the lowest, or may select, as a reference carrier, a carrier for which the index is the highest.

In addition, the terminal 20 may select, as a reference carrier, a carrier in which resources are least allocated, or may select, as a reference carrier, a carrier in which resources are most allocated. In addition, the terminal 20 may select, as a reference carrier, a carrier of the primary cell, or may select, as a reference carrier, a carrier of the secondary cell. In other words, the terminal 20 may determine the reference carrier, based on the cell type.

The terminal 20 may select the reference carrier by combining a plurality of above-described methods for selecting the reference carrier. In addition, the terminal 20 may indicate, to the network, information indicating the method of selecting the reference carrier, a threshold value, and the reference carrier. In addition, a plurality of reference carriers may be selected.

The terminal 20 may indicate, to the network: presence or absence of occurrence of power imbalance in carriers other than the reference carrier; together with a power imbalance indicating the degree of margin or the degree of excessively high/low power and/or a difference from the threshold value.

The contents to be indicated from the terminal 20 to the network, for example, information indicating the method for selecting the reference carrier, a threshold value, the reference carrier, etc., may be specified in advance by the network, and the terminal 20 may transmit an indication related to the power imbalance to the network, based on the information specified by the network. In addition, the contents that are specified in advance by the network may be changed for each base station or for each terminal. For example, the threshold value may be 3 dB for the base station 10A and the threshold value may be 6 dB for the base station 10B.

Table 1 is an example in which indexes are allocated for contents that are indicated from the terminal 20 to the base station 10.

**[Table 1]**

| Index | Presence or absence of occurrence of power imbalance |
|---|---|
| 0 | Present |
| 1 | Absent |

As illustrated in Table 1, in a case where the power imbalance has occurred, the terminal 20 may transmit an index 0 to the base station 10, and, in a case where the power imbalance has not occurred, the terminal 20 may transmit an index 1 to the base station 10.

Table 2 is an example in which, at the time of carrier aggregation using three carriers of carrier 1, carrier 2, and carrier 3, contents to be indicated from the terminal 20 to the base station 10 are grouped into packages, and indexes are allocated to the packages.

**[Table 2]**

| Index | Reference carrier/Selection reference | Presence or absence of power imbalance in carriers other than the reference |
|---|---|---|
| 0 | Carrier 1 | Carrier 2: Present |
| | /Reception power | Carrier 3: Absent |
| 1 | Carrier 1 | Carrier 2: Present |
| | /Reception power | Carrier 3: Present |
| 2 | Carrier 1 | Carrier 2: Absent |
| | /Reception power | Carrier 3: Absent |
| - | - | - |
| X | Carrier 3 | Carrier 1: Absent |
| | /Reception power | Carrier 2: Absent |

As illustrated in Table 2, an index indicates the reference carrier, the selection reference, and presence or absence of occurrence of power imbalance in carriers other than the reference carrier. For example, in a case where index 0 is indicated, the index 0 indicates that the reference carrier is carrier 1, the selection reference is reception power, there is an occurrence of power imbalance in carrier 2, and there is no occurrence of power imbalance in carrier 3.

Table 3 is an example in which, at the time of carrier aggregation using three carriers of carrier 1, carrier 2, and carrier 3, contents to be indicated from the terminal 20 to the base station 10 are grouped into packages, and indexes are allocated to the packages.

**[Table 3]**

| Index | Reference carrier | Presence or absence of occurrence of power imbalance in carriers other than the reference | Power imbalance and/or difference from the threshold value in carriers other than the reference |
|---|---|---|---|
| 0 | Carrier 1 | Carrier 2: Present | [Power imbalance] |
| | | Carrier 3: Absent | Carrier 2: +9 dB |
| | | | Carrier 3: -1 dB |
| | | | [Difference from the threshold value] |
| | | | Carrier 2: +3 dB (excessive) |
| | | | Carrier 3: -5 dB (margin) |
| 1 | Carrier 1 | Carrier 2: Present | [Power imbalance] |
| | | Carrier 3: Present | Carrier 2: +1 dB |
| | | | Carrier 3: +2 dB |
| 2 | Carrier 1 | Carrier 2: Absent | - |
| | | Carrier 3: Absent | |
| - | - | - | - |
| X | Carrier 3 | Carrier 1: Absent | - |
| | | Carrier 2: Absent | |

As illustrated in Table 3, an index indicates the reference carrier, presence or absence of power imbalance in carriers other than the reference carrier, and the power imbalance and/or difference from the threshold value of power imbalance in carriers other than the reference carrier. For example, in a case where index 0 is indicated, the index 0 indicates that the reference carrier is carrier 1, there is occurrence of power imbalance in carrier 2, there is no occurrence of power imbalance in carrier 3, and, in addition, that the power imbalance of carrier 2 is +9 dB and the power imbalance of carrier 3 is -1 dB, and/or, the difference of carrier 2 from the threshold is +3 dB in the excessive direction, and the difference of carrier 3 from the threshold is -5 dB within the margin.

Fig. 4 is an example of a conventional CQI table.

**[Table 4]**

| CQI index | modulation | code rate * 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

The terminal 20 may select, as a reference carrier, a carrier for which the CQI index in the CQI table illustrated in Table 4 is the lowest, or may select, as a reference carrier, a carrier for which the CQI index is the highest. Note that the CQI table is not limited to Table 4, and another CQI table may be used.

Hereinafter, the proposal 2 will be described in detail. The terminal 20 may measure the reception power imbalance between carriers, and may indicate the network not to allocate one or more specific carriers, or may indicate the network to allocate one or more specific carriers.

The indication may indicate information indicating the center frequency of the carrier; the carriers may be indexed and an index may be indicated; a bitmap indicating the carriers may be generated and the indication may be performed by using 0 or 1; or the indication may be performed by a combination of the above-described methods. The bitmap may indicate the allocation by 1 and may indicate no allocation by 0, or may indicate the other way around. In a case of indicating the information indicating the center frequency of the carrier or indicating the index, information indicating that the carrier is not to be allocated or information indicating that the carrier is to be allocated may be additionally indicated.

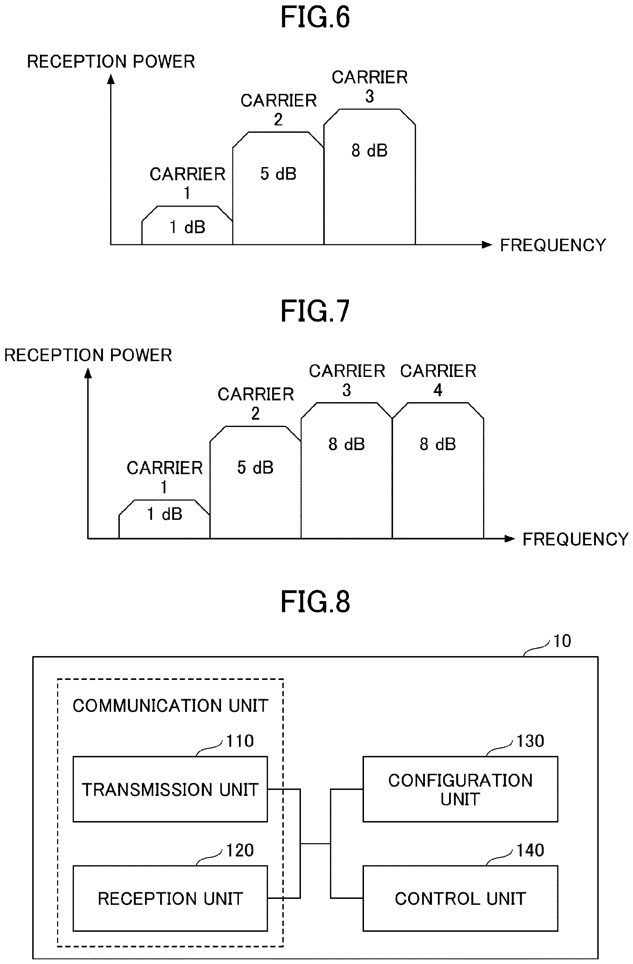

Fig. 6 is a drawing illustrating an example (2) of determining power imbalance in an embodiment of the present invention. In Fig. 6, in a case where the threshold value is 6 dB, for example, there is an occurrence of power imbalance between carrier 1 and carrier 3. In a case as illustrated in Fig. 6, the terminal 20 may indicate information indicating one or more of 1) to 4) described below to the base station 10.

1) Indicate not to allocate carrier 1
2) Indicate to allocate carrier 2 and carrier 3
3) Indicate not to allocate carrier 3
4) Indicate to allocate carrier 1 and carrier 2

Fig. 7 is a drawing illustrating an example (3) of determining power imbalance in an embodiment of the present invention. In Fig. 7, in a case where the threshold value is 6 dB, for example, there is an occurrence of power imbalance between carrier 1 and carrier 3, and there is an occurrence of power imbalance between carrier 1 and carrier 4. In a case as illustrated in Fig. 7, the terminal 20 may indicate information indicating one or more of 1) to 4) described below to the base station 10.

1) Indicate not to allocate carrier 1
2) Indicate to allocate carrier 2, carrier 3 and carrier 4
3) Indicate not to allocate carrier 3 and carrier 4
4) Indicate to allocate carrier 1 and carrier 2

Hereinafter, the proposal 3 will be described in detail. The network may indicate carrier allocation switching or scheduling to the terminal 20, based on the information of proposal 1 and/or proposal 2 indicated by the terminal 20. In addition, the network may indicate, to the terminal 20, that the transmission power of a specific carrier is changed, based on the information of proposal 1 and/or proposal 2.

The switching indication of carrier allocation or scheduling may be one or more of 1) to 3) described below.

1) Indication of removing allocation of one or more specific carriers in the same band. For example, the CA may be changed from three-carrier CA to two-carrier CA.
2) Indication of allocating one or more specific carriers in the same band or in different bands. For example, the CA may be changed from three-carrier CA to four-carrier CA.
3) Indication of removing only resource allocation for one or more specific carriers in the same band. The terminal 20 that has received the indication may report the proposal 1 and/or proposal 2 with respect to the power imbalance including the specific carriers. In a case where the report is received and the power imbalance is resolved, the network may restart the resource allocation of the specific carriers. For example, during the three-carrier CA, the communication may be continued substantially using two carriers by removing only resource allocation in one carrier.

Based on the indication of proposal 1 and/or proposal 2 from the terminal 20, the base station 10 may change the transmission power in order to remove the reception power imbalance between carriers or may change the transmission power by taking into account the margin of the power imbalance from the threshold value or the excessive amount of the power imbalance from the threshold value.

For example, in a case where an indication indicating that the reception power of carrier 2 is less than the reception power of carrier 1 by 9 dB is received from the terminal 20, the base station 10 may increase the transmission power of carrier 2 by 9 dB. In a case where an indication indicating that the reception power of carrier 2 is less than the power value obtained by subtracting the threshold value from the reception power of carrier 1 by 3 dB is received from the terminal 20, the base station 10 may increase the transmission power of carrier 2 by 3 dB.

Note that, regarding the proposal 1 and proposal 2, the target carrier to be measured and reported may be a carrier that has already been allocated to the terminal 20, or may further include a carrier that can be measured by the terminal 20. For example, in an indication from the terminal 20, the measured adjacent carriers may be included, and, in a case where there is a carrier in which there is no power imbalance among the measured adjacent carriers, the terminal 20 may indicate to the base station 10 to allocate the carrier.

Note that the UE capability indicating the support of proposal 1 and/or proposal 2 may be defined. The UE capability may be different for each terminal.

Note that the activation or deactivation of the proposal 1 and/or proposal 2 may be switched by the network.

Note that the indication from the network to the terminal 20 may be performed by using DCI, MAC-CE, or RRC signaling.

Note that the report related to the proposal 1 and/or proposal 2 may be reported together with the conventional report from the terminal to the network (for example, CSI report, measurement report, or the like). In addition, the report of functions related to the proposal 1 and/or proposal 2 may be reported together with the conventional report from the terminal to the network (for example, CSI report, measurement report, or the like).

With respect to the report period related to the proposal 1 and/or proposal 2, the indication may an indication with a constant period.

In addition, the report period related to the proposal 1 and/or proposal 2 may be changed by the terminal 20, based on the threshold value. In addition, the network may change the report period, based on the report related to the proposal 1 and/or proposal 2. For example, in a case where the reception power of a carrier exceeds a range that is defined by a threshold value for determining an occurrence of power imbalance, that is, in a case where the power imbalance is determined to have occurred, the terminal 20 may shorten the report period until the power imbalance ends. The length of the report period may be changed in accordance with the degree of excessive amount from a range that is defined by the threshold value, or may be a constant value.

For example, in a case where the reception power of a carrier does not exceed a range that is defined by a threshold value for determining an occurrence of power imbalance, that is, in a case where the power imbalance is determined to have not occurred, the terminal 20 is not required to perform reporting related to the proposal 1 and/or proposal 2. In a case of performing the reporting, the report period may be longer when the reception power is within a range defined by the threshold value. The length of the report period may be changed in accordance with the degree of excessive amount from a range that is defined by the threshold value, or may be a constant value. In a case where the network does not receive a report related to the proposal 1 and/or proposal 2, the network may determine that the reception power of a carrier does not exceed a range that is defined by a threshold value for determining an occurrence of power imbalance. Note that the threshold value is not required to be a threshold value for determining an occurrence of power imbalance, and may be another independent threshold value.

In addition, the report period related to the proposal 1 and/or proposal 2 may be changed in accordance with the mobility of the terminal 20. For example, the degree of the mobility change may be determined from the moving speed of the terminal 20, or may be determined from the change of the reception power in the time domain. In addition, the determination may be performed based on something that is used for obtaining the moving speed (for example, signaling from the network such as an information element, highSpeedMeasFlag-r16, indicating the measurement for the high-speed train).

In a case where the degree of the mobility change is large, the degree of the propagation environment change is also large and there is a high possibility that the power imbalance will be an issue, and thus, the report period may be shorter. On the other hand, in a case where the degree of the mobility change is large, the degree of the propagation environment change is also large and there is a high possibility that the power imbalance will be a short-term issue, and thus, the report period may be longer. The increase or decrease of the report period may be changed in accordance with the degree of departing from the range defined by the threshold value or in accordance with the degree of the margin, or the report period may be constant.

In a case where the degree of the mobility change is small, the degree of the propagation environment change is also small and there is a high possibility that the issue of the power imbalance continues, and thus, the report period may be shorter. On the other hand, in a case where the degree of the mobility change is small, the degree of the propagation environment change is also small and there is a low possibility that the power imbalance will be an issue, and thus, the report period may be longer. The increase or decrease of the report period may be changed in accordance with the degree of departing from the range defined by the threshold value or in accordance with the degree of the margin, or the report period may be constant.

For example, in a case where there is an occurrence of power imbalance when the user is in a state of standing still, the improvement is required to be performed quickly, and in a case where there is no occurrence of power imbalance, the report with a short period is not required.

In addition, the report period related to the proposal 1 and/or proposal 2 may be determined by combining the above-described method based on a threshold value and the method based on the mobility. The report period related to the proposal 1 and/or proposal 2 may be determined by combining the method based on a threshold value and the method based on the mobility and by prioritizing one of the two methods.

Table 5 is an example in which contents of indication from the terminal 20 to the base station 10 or contents of indication from the base station 10 to the terminal 20 are grouped into packages regarding the report period related to the proposal 1 and/or proposal 2, and indexes are allocated to the packages.

**[Table 5]**

| Index | Threshold value | Report period |
|---|---|---|
| 0 | Exceeded | Configure to shorter |
| | | Configure to XX seconds |
| 1 | Not exceeded | Configure to longer |
| | | Configure to YY seconds |

As illustrated in Table 5, information indicating whether the threshold value is exceeded or not exceeded and information indicating the change of the report period are associated with an index. For example, in a case where an index 0 is indicated, an indication may be performed to shorten the report period when the threshold value is exceeded, or an indication may be performed to configure the report period to XX seconds when the threshold value is exceeded.

Table 6 is an example in which contents of indication from the terminal 20 to the base station 10 or contents of indication from the base station 10 to the terminal 20 are grouped into packages regarding the report period related to the proposal 1 and/or proposal 2, and indexes are allocated to the packages.

**[Table 6]**

| Index | Threshold value | Mobility | Report period |
|---|---|---|---|
| 0 | Exceeded | Fast | Configure to shorter (threshold value is prioritized) |
| 1 | Exceeded | Fast | Configure to longer (mobility is prioritized) |
| 2 | Exceeded | Slow | Configure to shorter |
| 3 | Not exceeded | Fast | Configure to shorter (mobility is prioritized) |
| 4 | Not exceeded | Fast | Configure to longer (threshold value is prioritized) |
| 5 | Not exceeded | Slow | Configure to longer |

As illustrated in Table 6, information indicating whether the threshold value is exceeded or not exceeded, information indicating the mobility, and information indicating the change of the report period may be associated with an index. For example, in a case where an index 0 is indicated, an indication may be indicated to shorten the report period when the threshold value is exceeded and the mobility is fast. For example, in a case where an index 2 is indicated, an indication may be indicated to shorten the report period when the threshold value is exceeded and the mobility is slow.

According to the embodiment described above, terminal 20 can indicate, to the network, information indicating whether there is an occurrence of power imbalance. In addition, the base station 10 can perform carrier switching, based on the information.

In other words, the quality decrease caused by the reception power imbalance between carriers can be suppressed in a wireless communication system.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only one of the functions in an embodiment of the present invention.

### <Base station 10>

Fig. 8 is a diagram illustrating an example of a functional configuration of the base station 10. As shown in Fig. 8, the base station 10 includes a transmission unit 110, a reception unit 120, a configuration unit 130, and a control unit 140. The functional structure illustrated in Fig. 8 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus if necessary. The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

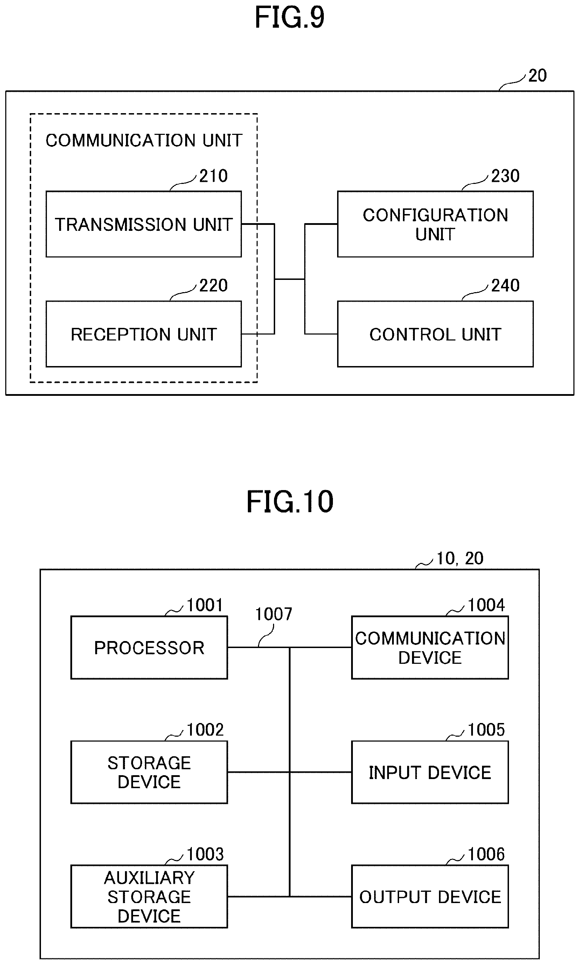

Fig. 9 is a diagram illustrating an example of a functional configuration of the terminal 20. As shown in FIG. 9, the terminal 20 includes a transmission unit 210, a reception unit 220, a configuration unit 230, and a control unit 240. The functional structure illustrated in Fig. 9 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device if necessary. In addition, the configuration unit 230 also stores pre-configured configuration information. The control unit 240 controls the entire terminal 20. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### (Hardware structure)

In the above functional structure diagrams used for describing an embodiment of the present invention (Fig. 8 and Fig. 9), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

For example, the base station 10, terminal 20, etc., according to an embodiment of the present disclosure may function as a computer for processing the radio communication method of the present disclosure. Fig. 10 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 8 may be realized by control programs that are stored in the storage device 1002 and are executed by the processor 1001. Further, for example, the control unit 240 of the terminal 20 illustrated in Fig. 9 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

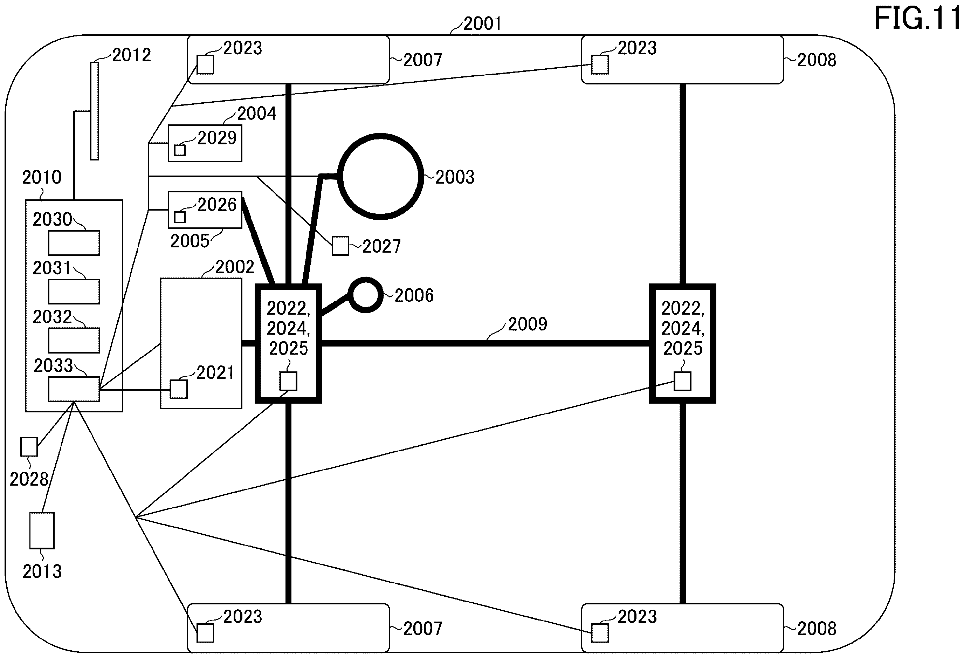

Fig. 11 shows an example of a configuration of a vehicle 2001. As shown in Fig. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments of the base station 10 or the terminal 20 described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel (also called a handle) and is configured to steer at least one of the front wheels and the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal depression signal acquired by an accelerator pedal sensor 2029, a brake pedal depression signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021-29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the accelerator pedal depression signal acquired by the accelerator pedal sensor 2029, the brake pedal depression signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in vehicle 2001.

### (Embodiment summary)

As described above, according to an embodiment of the present invention, a terminal is provided. The terminal includes: a reception unit configured to receive a signal from a base station via each of multiple carriers in a same band; a control unit configured to determine whether a reception power imbalance between two carriers among the multiple carriers exceeds a threshold value; and a transmission unit configured to transmit information indicating whether the reception power imbalance exceeds the threshold value to the base station.

According to the above configuration, terminal 20 can indicate, to the network, information indicating whether there is an occurrence of power imbalance. In addition, the base station 10 can perform carrier switching, based on the information. In other words, the quality decrease caused by the reception power imbalance between carriers can be suppressed in a wireless communication system.

The control unit may assume one of the multiple carriers as a reference carrier, and may determine whether respective reception power imbalances between the reference carrier and all carriers other than the reference carrier among the multiple carriers exceed the threshold value. According to the above configuration, terminal 20 can indicate, to the network, information indicating whether there is an occurrence of power imbalance. In addition, the base station 10 can perform carrier switching, based on the information.

The control unit may determine the reference carrier, based on at least one of a carrier reception power and a cell type. According to the above configuration, terminal 20 can indicate, to the network, information indicating whether there is an occurrence of power imbalance. In addition, the base station 10 can perform carrier switching, based on the information.

The control unit may determine a carrier that is not to be allocated, based on the determination, and the transmission unit may transmit information indicating a carrier not to be allocated to the base station. According to the above configuration, terminal 20 can indicate, to the network, information indicating whether there is an occurrence of power imbalance. In addition, the base station 10 can perform carrier switching, based on the information.

The control unit may determine a period for transmitting the information to the base station, based on a degree of exceeding the threshold value by the reception power imbalance or on a mobility of the terminal itself. According to the above configuration, terminal 20 can indicate, to the network, information indicating whether there is an occurrence of power imbalance with an appropriate report period. In addition, the base station 10 can perform carrier switching, based on the information.

In addition, according to an embodiment of the present invention, a communication method performed by a terminal is provided. The communication method includes: receiving a signal from a base station via each of multiple carriers in a same band; determining whether a reception power imbalance between two carriers among the multiple carriers exceeds a threshold value; and transmitting information indicating whether the reception power imbalance exceeds the threshold value to the base station.

According to the above configuration, terminal 20 can indicate, to the network, information indicating whether there is an occurrence of power imbalance. In addition, the base station 10 can perform carrier switching, based on the information. In other words, the quality decrease caused by the reception power imbalance between carriers can be suppressed in a wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer, decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL)) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive a signal from a base station via each of multiple carriers in a same band;
a control unit configured to determine whether a reception power imbalance between two carriers among the multiple carriers exceeds a threshold value; and
a transmission unit configured to transmit information indicating whether the reception power imbalance exceeds the threshold value to the base station.

2. The terminal as claimed in claim 1, wherein
the control unit assumes one of the multiple carriers as a reference carrier, and determines whether respective reception power imbalances between the reference carrier and all carriers other than the reference carrier among the multiple carriers exceed the threshold value.

3. The terminal as claimed in claim 2, wherein
the control unit determines the reference carrier, based on at least one of a carrier reception power and a cell type.

4. The terminal as claimed in claim 1, wherein
the control unit determines a carrier that is not to be allocated among the multiple carriers, based on the determination, and
the transmission unit transmits information indicating the carrier that is not to be allocated to the base station.

5. The terminal as claimed in claim 1, wherein
the control unit determines a period for transmitting the information to the base station, based on a degree of exceeding the threshold value by the reception power imbalance or on a mobility of the terminal itself.

6. A communication method performed by a terminal, the communication method comprising:
receiving a signal from a base station via each of multiple carriers in a same band;
determining whether a reception power imbalance between two carriers among the multiple carriers exceeds a threshold value; and
transmitting information indicating whether the reception power imbalance exceeds the threshold value to the base station.
